# EUROPÄISCHE PATENTSCHRIFT

(11) **EP 1 662 170 B1**
(45) Veröffentlichungstag und Bekanntmachung des Hinweises auf die Patenterteilung: **25.06.2008**
(21) Anmeldenummer: 04106110.2
(22) Anmeldetag: 26.11.2004
(51) Int. Cl.: F16F 9/34, F16F 9/512, F16F 9/02

(54) **Pneumatischer Dämpfer**
Pneumatic damper
Amortisseur pneumatique

(43) Veröffentlichungstag der Anmeldung: 31.05.2006
(73) Patentinhaber: Krischke-Lengersdorf, Christian, 82515 Wolfratshausen (DE)
(72) Erfinder: Krischke-Lengersdorf, Christian, 82515 Wolfratshausen (DE); Eberstein, Sven, 82515 Wolfratshausen (DE)
(74) Vertreter: Szynka, Dirk

(56) Entgegenhaltungen:
- EP-A- 0 562 284
- PATENT ABSTRACTS OF JAPAN Bd. 2000, Nr. 06, 22. September 2000 (2000-09-22) & JP 2000 088028 A (PIOLAX INC), 28. März 2000 (2000-03-28)
- PATENT ABSTRACTS OF JAPAN Bd. 009, Nr. 073 (M-368), 3. April 1985 (1985-04-03) & JP 59 205007 A (KOJIMA PRESS KOGYO KK), 20. November 1984 (1984-11-20)

## Beschreibung

Die vorliegende Erfindung bezieht sich auf einen pneumatischen Dämpfer zum mechanischen Dämpfen von Bewegungen von Vorrichtungsteilen. In Betracht kommen dabei insbesondere Türen, Klappen oder Schubladen in Möbeln oder Häusern.

Es ist an sich längst bekannt, Bewegungen mechanisch zu dämpfen, beispielsweise die Ein- und Auszugsbewegungen in einer Möbelschublade zu dämpfen. Damit soll verhindert werden, dass eine Schublade wegen etwas zu heftiger Betätigung übermäßig schnell geöffnet und geschlossen wird und mit Lärm und Erschütterungen verbunden an einen jeweiligen Endanschlag stößt. Solche Fehlbetätigungen können durch mangelnde Achtsamkeit aber auch durch falsche intuitive Annahmen über den Beladungszustand der Schublade und damit zu große Kräfte bei der Betätigung entstehen.

Auch kann es erwünscht sein, eine schwer beladene Schublade, die wegen der Masseträgheit mit einer gewissen Kraft beschleunigt werden muss, um eine Schließ- oder Öffnungsbewegung zu beginnen, nicht ungedämpft bzw. ungebremst in die entgegengesetzte Position fahren zu lassen.

Analoge Überlegungen gelten für viele andere Anwendungsfälle, beispielsweise das Öffnen und Schließen von anderen beweglichen Möbelteilen wie Türen oder Klappen, für Fenster oder Zimmer- und Haustüren im Luftzug und so weiter. Diese Bereiche sind denkbare und bevorzugte, jedoch nicht ausschließliche Anwendungsbereiche der im Folgenden erläuterten Erfindung.

Die DE 199 11 122 zeigt einen Luftdämpfer für einen Handschuhfachdeckel und ähnliche Anwendungen in einem Kraftfahrzeug nach dem Oberbegriff des Anspruchs 1. Eine einstückige Kappe aus einem Elastomermaterial enthält einen Durchgang 15 zur Dämpfung einer Bewegung. Ferner kann bei der umgekehrten Bewegungsrichtung ein Dichtungsflansch 14 von einem Dichtabsatz 4 abheben, um Luft ohne wesentlichen Widerstand durchzulassen, wobei auch die Elastizität des Materials für die Bewegung des Dichtflansches eine Rolle spielt.

Auch die JP 2000088028 A zeigt einen Luftdämpfer für einen Handschuhfachdeckel. Ein über den Eingriff von Nasen in dem gegenüber axiales Spiel aufweisende Schlitze von Kammerwänden montierbares Teil weist eine kleine Öffnung 18 als Drosselöffnung in seinem Zentrum auf und gibt abhängig vom inneren Luftdruck in einer Kammer durch eine axiale Bewegung des Teils einen Ringspalt zwischen einer Dichtlippe und einer Dichtfläche frei oder nicht.

Die EP 0 562 284 A zeigt einen Luftdämpfer für ähnliche Anwendungen mit einer Drosselöffnung und einem Rückschlagventil.

Der Erfindung liegt das Problem zugrunde, einen Dämpfer zur mechanischen Dämpfung der Bewegung von Vorrichtungsteilen mit einer verbesserten Leistungsfähigkeit und ein entsprechendes Herstellungsverfahren anzugeben.

Die Erfindung richtet sich auf einen pneumatischen Dämpfer mit einer pneumatischen Kammer mit einer beweglichen Wand und einer Drosselöffnung in einer Wand der pneumatischen Kammer zur Drosselung einer bei zumindest einer zu dämpfenden Bewegungsrichtung infolge der Bewegung der Vorrichtungsteile auftretenden Gasbewegung, gekennzeichnet durch eine Ventileinrichtung mit einem über eine elastische Elastomer-Aufhängung aufgehängten Ventilteil, welches die Drosselöffnung begrenzt und die Drosselöffnung mit zunehmendem Druck zwischen den Seiten der Ventileinrichtung infolge einer elastischen Dehnung der Elastomer-Aufhängung vergrößert, wobei das Ventilteil mit der elastischen Elastomer-Aufhängung einstückig ausgeführt ist.

Daneben richtet sich die Erfindung auch auf ein bevorzugtes Herstellungsverfahren für einen solchen Dämpfer gemäß Anspruch 9.

Im Übrigen sind bevorzugte Ausgestaltungen der Erfindung in den abhängigen Ansprüchen angegeben.

Grundsätzlich gilt für die folgende Beschreibung, dass die Erfindung in all ihren Merkmalen sowohl im Hinblick auf die Vorrichtungskategorie als auch im Hinblick auf Herstellungsverfahren und ein Verfahren zum Dämpfen selbst offenbart sein soll, ohne dass zwischen diesen Aspekten noch im Einzelnen ausdrücklich unterschieden wird.

Die Erfindung sieht einen pneumatischen Dämpfer vor, der demzufolge über mindestens eine pneumatische Kammer verfügt. Die zu dämpfende Bewegung soll dabei in einer Relativbewegung zwischen einer beweglichen Wand der pneumatischen Kammer und dem übrigen Dämpfer, also relativ zu dem "Ruhesystem" des Dämpfers, umgesetzt werden, wobei natürlich das bewegte Vorrichtungsteil mit dem Dämpfer oder mit der Wand gekoppelt sein kann.

In einer der Wände der pneumatischen Kammer ist eine Drosselöffnung zur Drosselung einer Gasbewegung in die oder aus der Kammer angebracht. Diese Drosselöffnung ist erfindungsgemäß in einer Ventileinrichtung vorgesehen, welche so ausgelegt ist, dass die Drosselöffnung abhängig von dem zwischen den beiden Seiten der Ventileinrichtung (also innerhalb der Kammer an der Ventileinrichtung und außerhalb der Kammer in der Ventileinrichtung) herrschenden Druck verändert wird. Dabei soll ein elastisch aufgehängtes Ventilteil die Drosselöffnung zumindest teilweise begrenzen und der erwähnte Druckunterschied zusammenwirkend mit der elastischen Aufhängung für eine entsprechende Auslenkung des Ventilteils und daraus resultierende Vergrößerung oder Verkleinerung der effektiven Drosselöffnungsfläche sorgen.

Wenn man sich zur Veranschaulichung eine schnelle Öffnungs- oder Schließbewegung einer Schublade vorstellt, so wird diese auf eine Relativbewegung zwischen dem Dämpfer und der beweglichen Wand der pneumatischen Kammer übertragen und führt zu einer entsprechenden Druckdifferenz über die Ventileinrichtung. Dabei kann in der pneumatischen Kammer ein Unterdruck oder auch ein Überdruck erzeugt werden. Dieser erzeugte Druck soll zumindest zu einem wesentlichen Teil durch die Ventileinrichtung ausgeglichen werden, die pneumatische Kammer soll also im Übrigen näherungsweise dicht sein, wobei gewisse Restundichtigkeiten, wie im Folgenden noch erläutert, durchaus auch erwünscht sein können.

Eine schnelle Bewegung erzeugt nach einer gewissen Bewegungsstrecke eine relativ große Druckveränderung und damit eine große Druckdifferenz, erfindungsgemäß also eine vergrößerte Drosselöffnungsfläche. Der Strömungswiderstand gegenüber dem durch die Drosselöffnung strömenden Gas sinkt somit. Mit der Erfindung kann also erreicht werden, dass der Dämpfer sich heftigen Bewegungen nicht im Sinne einer Quasi-Blockade widersetzt, wie dies von konventionellen Dämpfern bekannt ist. Andererseits ist die Drosselöffnungsfläche bei kleineren Druckdifferenzen, etwa sehr sachten Bewegungen, entsprechend kleiner, so dass auch solche Bewegungen noch in einem gewissen Umfang gedämpft werden.

Es kann sogar vorgesehen sein, dass sich die Ventileinrichtung erst ab einer gewissen Druckdifferenz öffnet, so dass eine gewisse Mindestdämpfungskraft gewährleistet bleibt. Andererseits können beabsichtigte Undichtigkeiten der pneumatischen Kammer dazu führen, dass sehr sanfte Bewegungen infolge einer Gasströmung durch die Undichtigkeit ganz leicht und fast ungedämpft ablaufen, was ebenfalls erwünscht sein kann. Diese Undichtigkeiten können sowohl in der Konstruktion der Ventileinrichtung als auch an anderer Stelle, etwa bei der Abdichtung der beweglichen Wand, vorliegen.

Näherungsweise kann ein relativ großer Anstieg der Drosselöffnungsfläche bei steigendem Druckunterschied zu einem regelventilähnlichen Verhalten führen, also zu einer näherungsweisen Beibehaltung eines bestimmten Druckunterschieds und damit einer bestimmten Dämpfungskraft.

Der erfindungsgemäße Dämpfer kann ferner mit extern oder auch intern integrierten Rückstellvorrichtungen, beispielsweise Federn, kombiniert sein. Eine solche Feder kann auch in der pneumatischen Kammer vorliegen. Der pneumatische Dämpfer kann darüber hinaus auch pneumatische Funktionen als Antrieb ausführen, was jedoch nicht bevorzugt ist. Die Erfindung bezieht sich vielmehr vor allem auf rein passive Dämpfer.

Bei einer bevorzugten Ausgestaltung soll der erfindungsgemäße Dämpfer mit Umgebungsluft arbeiten, also kein gesondert vorgesehenes Pneumatikgas enthalten. Insbesondere kann die Pneumatikkammer auch über die Ventileinrichtung direkt mit der Umgebung kommunizieren.

Die Ventileinrichtung verfügt über eine elastische Aufhängung des Ventilteils, beispielsweise eines die Drosselöffnung im nichtausgelenkten Zustand fast oder ganz verschließenden Stöpsels. Erfindungsgemäß ist die elastische Aufhängung durch ein Elastomer realisiert, wobei das aufgehängte Ventilteil und die elastische Aufhängung einstückig aus Elastomer gebildet sind. Beispielsweise kann das Ventilteil ein im Wesentlichen zylindrischer Stöpsel, auch mit konischer Ventilfläche, sein, der an seitlichen Stegen aus dem gleichen Elastomermaterial aufgehängt ist. Diese Stege können in verschiedener Form außerhalb gehalten sein, beispielsweise in entsprechenden Aufnahmen eingeklemmt sein. Besonders bevorzugt ist allerdings, dass auch eine an die Stege anschließende und das Ventilteil und die Stege geschlossen umgebende Halterung einstückig mit Ventilteil und Stegen oder anderweitiger Aufhängung ausgebildet ist. "Geschlossen" meint hierbei natürlich nicht die Richtungen, in denen die Ventileinrichtung gasdurchlässig sein muss, sondern bedeutet, dass die Halterung einen zu den im Verhältnis dazu seitlichen Richtungen im Wesentlichen geschlossenen Rahmen bildet. Insbesondere kann die Halterung in dieser einstückigen Form als elastischer Stöpsel in dem Dämpfer eingeklemmt und optional auch verrastet sein. Eine Veranschaulichung bietet das Ausführungsbeispiel.

Um Missverständnisse zu vermeiden, ist darauf hinzuweisen, dass die einstückige Ausbildung nicht notwendigerweise die gesamte Ventileinrichtung betrifft, also beispielsweise in dem Ausführungsbeispiel zwar die Halterung, die elastische Aufhängung und zwei Ventilteile einstückig aus Elastomer gebildet sind, jedoch nicht die von den Ventilteilen und deren konischen Ventilflächen zu verschließenden Öffnungen und die Wand, in denen sich diese befinden. Diese können vielmehr einstückig mit einem anderen Teil des Dämpfers ausgebildet sein.

Eine bevorzugte Ausführungsform ist ein Linearzylinder, in dem die bewegliche Wand durch einen Zylinderkolben gebildet ist, was auch im Ausführungsbeispiel dargestellt ist. Die Ventileinrichtung kann dabei vorzugsweise in einer dem Zylinderkolben gegenüberliegenden Wand vorgesehen sein. Im Vergleich zum Ausführungsbeispiel ist darauf hinzuweisen, dass diese Wand auch die Wand sein kann, durch die die Kolbenstange läuft. Im Übrigen könnte die Ventileinrichtung auch durchaus in dem Kolben selbst ausgebildet sein und zwischen zwei von dem Kolben und der Ventileinrichtung getrennten Pneumatikkammern vorliegen.

Die erwähnten Elastomerteile, ob es sich dabei um die Aufhängung alleine oder die einstückige Integration mit den anderen erwähnten Teilen handelt, werden vorzugsweise durch ein Spritzgussverfahren hergestellt. Dabei sind allerdings auch Vakuumverfahren und Druckgussverfahren bevorzugt. Besonders günstige Werkstoffe sind thermoplastische Elastomere und Elastomerverbundstoffe sowie Kautschuke, Silikone und thermoplastische Urethane.

Neben den bereits erwähnten bevorzugten Türen, Klappen und Schubladen in Möbeln und Häusern können sinnvolle Anwendungen für die Erfindung auch in ganz anderen Gebieten, etwa bei beweglichen Teilen in Automobilen, insbesondere bei Klappen und Türen, in Luftführungssystemen, bei Toilettenbrillen oder -deckeln (zur Verhinderung des lauten Auf- oder Zuschlagens) oder in anderen Bereichen liegen.

Im Folgenden wird die Erfindung anhand zweier Ausführungsbeispiele erläutert, wobei die offenbarten Einzelmerkmale auch in anderen Kombinationen erfindungswesentlich sein können und sich implizit, wie bereits erwähnt, sowohl auf die Vorrichtungskategorie als auch auf die Verfahrenskategorie der Erfindung beziehen.
- Figur 1: zeigt eine Längsschnittdarstellung eines erfindungsgemäßen Lineardämpfers.
- Figur 2: zeigt eine perspektivische Explosionsdarstellung des Lineardämpfers aus Figur 1.
- Figur 3: zeigt verschiedenen Seitenansichten, perspektivische Ansichten und eine Draufsicht auf eine Elastomerteil einer Ventileinrichtung des Lineardämpfers aus dem Figuren 1 und 2.
- Figur 4: zeigt den Lineardämpfer aus den Figuren 1 und 2 in vier verschiedenen Positionen zur Veranschaulichung seiner Funktionsweise.
- Figur 5: zeigt eine perspektivische Ansicht einer mit einem erfindungsgemäßen Dämpfer ausgestatteten Küchenschublade.
- Figur 6: zeigt eine perspektivische Darstellung eines mit einem erfindungsgemäßen Lineardämpfer ausgestatteten Küchenoberschranks mit einer Tür.
- Figur 7: zeigt eine perspektivische Darstellung eines mit einem erfindungsgemäßen Lineardämpfer ausgestatteten Küchenoberschranks mit einer Klappe.
- Figur 8: zeigt ein zweites Ausführungsbeispiel für einen erfindungsgemäßen Dämpfer in perspektivischer Ansicht.
- Figur 9: zeigt den Dämpfer aus Figur 8 im Schnitt quer zur Rotationsachse in drei verschiedenen Stellungen.

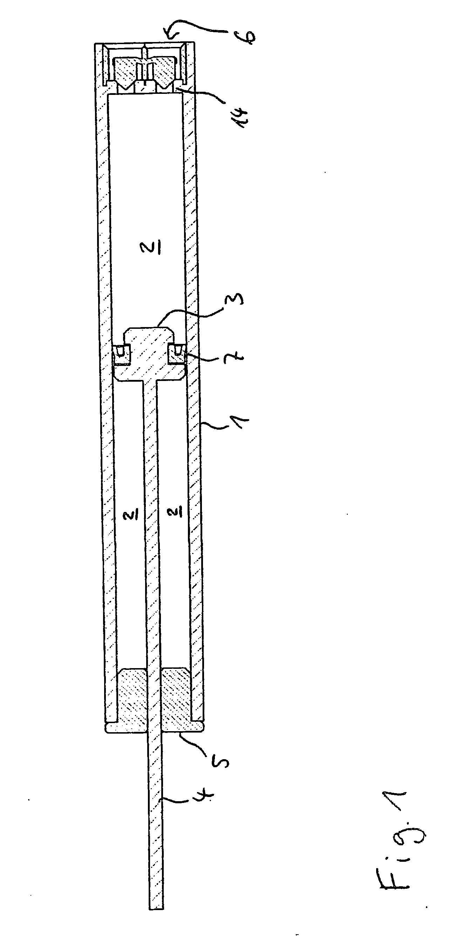

Figur 1 zeigt einen erfindungsgemäßen Lineardämpfer in Längsschnittdarstellung. Es handelt sich dabei um einen Pneumatikzylinder 1, der eine pneumatische Kammer 2 umschließt. In dieser pneumatischen Kammer 2 ist ein Pneumatikkolben 3 mit einer Kolbenstange 4 geführt. Der Pneumatikzylinder ist an seinem in Figur 1 linken Ende mit einem die Kolbenstange 4 führenden Stopfen 5 verschlossen und an seinem in Figur 1 rechten Ende mit einer im weiteren Verlauf noch näher beschriebenen Ventileinrichtung 6 ausgestattet. Der Kolben 3 ist gegenüber der Innenmantelwand des Zylinders 1 mit einer im Wesentlichen ringförmigen Dichtung mit im Wesentlichen U-förmigem Querschnittsprofil abgedichtet, die mit 7 beziffert ist. Der radial äußere Schenkel des U-Querschnittprofils bildet dabei eine etwas nach außen abgestellte und damit an der Innenmantelwand des Zylinders 1 anliegende Dichlippe.

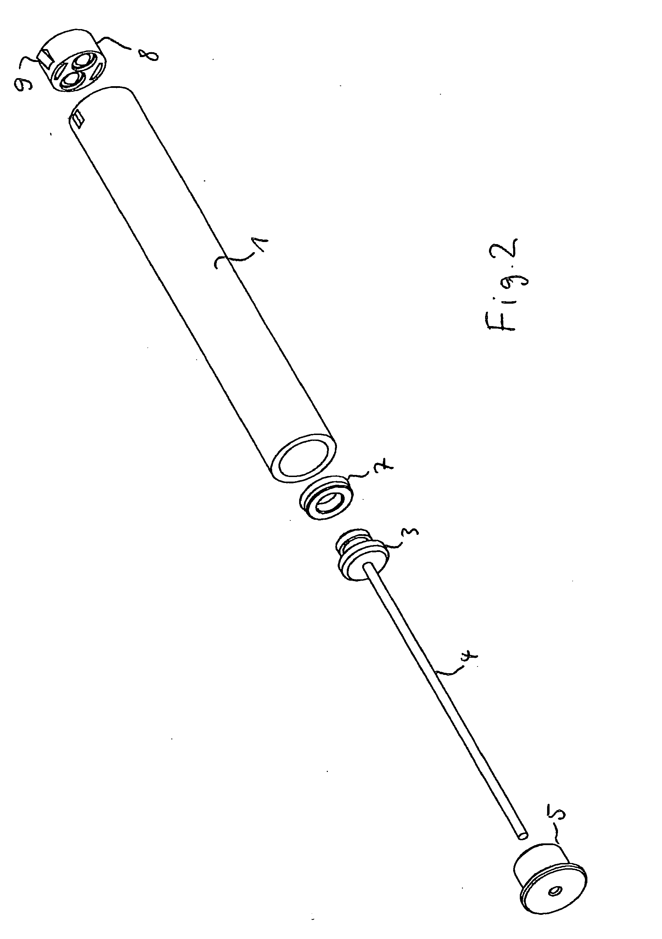

Figur 2 zeigt die anhand Figur 1 erläuten Teile in einer explosionsartigen Darstellung. Zusäztich zu Figur 1 erkennt man hier, dass die Ventileinrichtung 6 ein in Figur 1 stöpselartig in das Ende des im Wesentlichen rohrförmigen Pneumatikzylinders 1 klemmend eingesetztes elastomerteil 8 aufweist und dass dieses Elastomerteil 8 eine in Figur 2 nach oben weisende Rastnase 9 zum Eingriff in eine entsprechende Ausnehmung an dem Pneumatikzylinder 1 trägt.

Im Übrigen verdeutlicht Figur 2, dass der Lineardämpfer aus Figur 1 durch Aufsetzen des Dichtrings 7 auf den Kolben 3, Einführen des Kolbens 3 mit Hilfe der Kolbenstange 4 in den Zylinder 1, Aufsetzen des Stopfens 5 auf des Kolbenstange 4 und Einsetzen des Stopfens 5 in das offene Ende des Zylinders 1 sowie des erwähnte Einsetzen des Elastomerteils 8 der Ventileinrichtung 6 zusammengebaut werden kann.

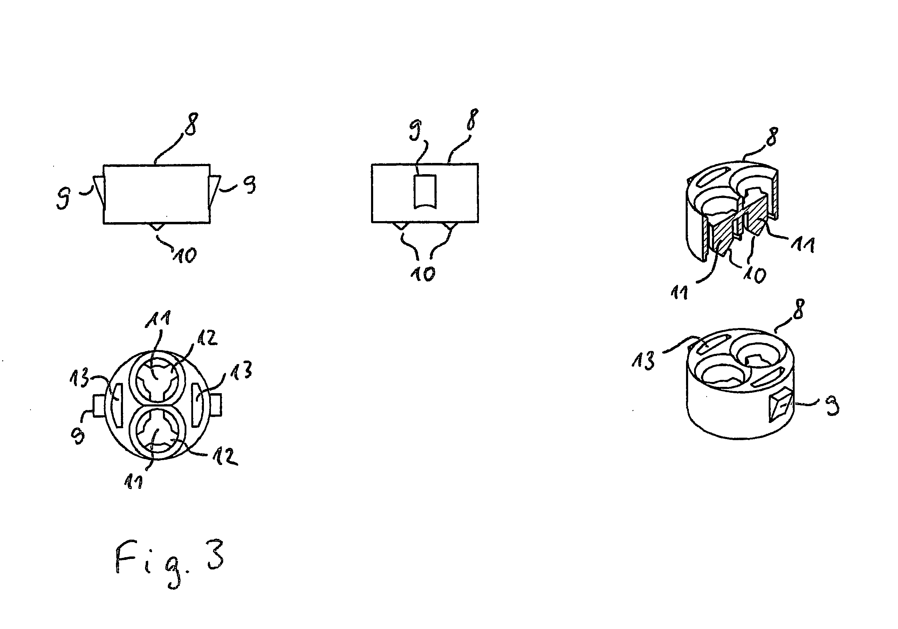

Figur 3 zeigt des Elastomerteil 8 aus Figur 2, das auch in Figur 1 durch die abweichende Schraffur zu erkennen ist, in Einzelheiten. Oben links und die der Mitte sind zwei seitliche Ansichten mit in Figur 3 vertikal liegender Zylinderachse zu sehen, die zueinander um 90° verdrht sing. Dabei zeigen sich zwei Rastnasen 9 gemäß Figur 2. Im Übrigen hat des Elastomerteil eine im Wesentlichen zylinderförmig einhüllende Form, die auch in den übrigen Darstellungen zu erkennen ist. Die im unteren Bereich erkennbaren Spitzen sind, wie die reschts oben dargestelle perspektivische Schnittansicht zeigt, navch unten weisende konische Ventilflächen 10 und Abschlussflächen von im Übrigen im Wesentlichen zylindrischen Stöpseln 11, die in dem Elastomerteil 8 vorgesehen und gehalten sind. Die zylindrischen Stöpsel 11 sind, wie sich auch anhand der links unten dargestellten Draufsicht und der nicht geschnittenen perspektivischen Ansicht rechts unten zeigt, paarweise jeweils in einem zylindrischen Loch in dem Elastomerteil 8 vorgesehen und an drei unter 120° zueinander liegenden Elastomerbrücken 12 einstückig als Bestandteil des Elastomerteils 8 ausgebildet. Sie halten, von den nur in ihrem oberen Bereich vorgesehen Brücken 12 abgesehen, einen radialen Abstand von den Innenbregrenzungsflächen der Löcher und geben damit einen gewissen Strömungsquerschnitt in der Zylinderasche des Lineardämpfers frei. Im Übrigen sind die Löcher im oberen Bereich angefast und weisen an unteren Ende stattdessen eine gestufte Form auf, mit der sie sich, wie Figur 1 zeigt, in justierender Weise an entsprechende Kanten in einer passenden Zwischenwand 14 des Zylinderrohrs 1 einfügen.

Zum Einsetzen in das Zylinderrohr 1 sind die bereits erwähnten Rastnasen 9 vorgesehen, die infolge in Figur 3 ebenfalls dargestellter Schlitze 13 gegen einen nicht allzu großen Widerstand nach innen verpresst werden können. Damit sind die Schlitze 13 nach Einsetzen des Elastomerteils 8 in das Zylinderrohr 1 im Wesentlichen dicht.

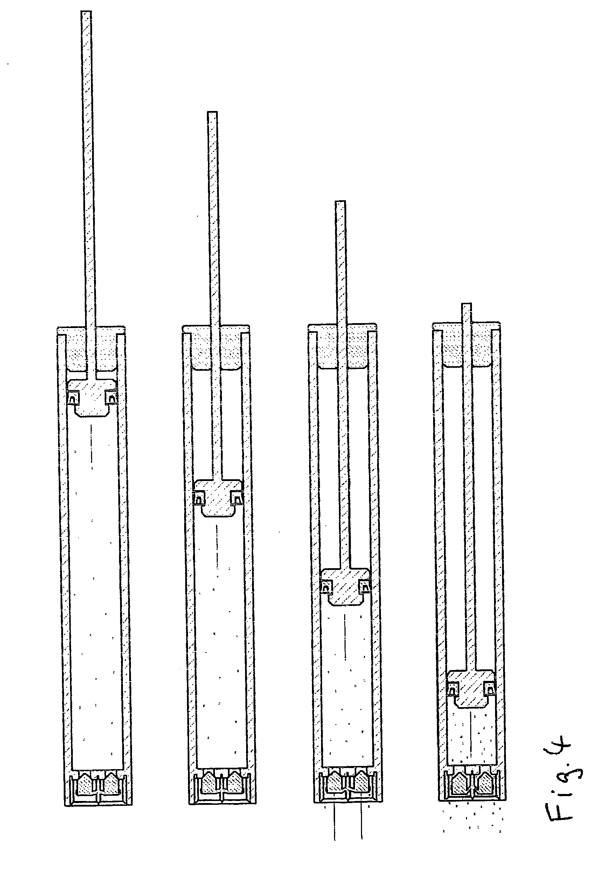

Figur 4 zeigt den Lineardämpfer im zusammengebauten Zustand entsprechend Figur 1, aber um 180° gedreht, in vier verschiedenen Arbeitspositionen. Figur 4 trägt der Klarheit der Darstellung halber keine Bezugsziffern. Es wird auf die Erläuterungen zu den Figuren 1 bis 3 und die entsprechenden zeichnerischen Übereinstimmungen verwiesen.

In Figur 4 ist die Kolbenstange 4 in der oberen Darstellung ganz ausgezogen und in der unteren Darstellung fast ganz eingeschoben, so dass der Kolben 3 dementsprechend unterschiedliche Positionen innerhalb der pneumatischen Kammer 2 einnimmt. Da der Kolben 3 mit Hilfe der Ringdichtung 7 zwei Teile der pneumatischen Kammer voneinander abgrenzt, wird in dem in Figur 4 linken (und in Figur 1 rechten) Teil der pneumatischen Kammer 2 Umgebungsluft komprimiert. Dies soll durch die von oben nach unten zunehmende Dichte die Luft symbolisierender Punkte dargestellt sein. Die in Figur 4 rechte Kammer entwickelt dabei keinen wesentlichen Unterdruck, weil die Durchführung der Kolbenstange 4 durch den Stopfen 5 entsprechend undicht ist. Im umgekehrten Fall, also bei einem Ausziehen der Kolbenstange 4, dichtet die Ventileinrichtung 6 mit Ausnahme der Restundichtigkeiten der Schlitze 13 relativ gut ab. In diesem Fall sorgt die U-Profilform der Dichtung 7 für einen Druckausgleich zwischen den beiden Teilen der pneumatischen Kammer 2.

Die bereits erwähnten konischen Dichtflächen 10 der zylindrischen Stöpsel 11 des Elastomerteils 8 aus Figur 3 liegen nach Einsetzen des Elastomerteils 8 in das in Figur 4 linke Ende des Zylinderrohres 1 an den Rändern von dazu passenden Bohrungen in der bereits erwähnten Zwischenwand 14 des Zylinderrohres 1 an und sind durch ein gewisses Übermaß mit einer leichten Anpresskraft infolge der elastischen Brücken 12 daran gehalten, werden also in anderen Worten durch diese Anlage etwas nach links ausgelenkt. Infolge dieser elastischen Spannung dichten die konischen Dichtflächen 10 mit den Bohrungen solange ab, bis der durch die Verschiebung des Kolbens 3 in dem linken Teil der pneumatischen Kammer 2 erzeugte Druck eine ausreichend große Kraft aufgebaut hat, um die Stöpsel 11 weiter axial auszulenken. Dies soll in Figur 4 in der von oben gerechnet dritten Abbildung der Fall sein. In der vierten Abbildung sind die Stöpsel ausgelenkt und geben dementsprechend zwischen den Bohrungen und den konischen Dichtflächen einen Querschnitt, nämlich eine Drosselöffnungsfläche, frei. In der unteren Darstellung in Figur 4 kann also die komprimierte Luft durch die Ventileinrichtung 6 nach außen entweichen. In den oberen drei Darstellungen wird dieser Druck erst aufgebaut. Die freigegebene Drosselöffnungsfläche ist infolge der elastischen Eigenschaften der Aufhängung durch die Brücken 12 druckabhängig größer oder kleiner.

Damit zeigt der Lineardämpfer die bereits beschriebenen Eigenschaften des Aufbaus einer gewissen Gegenkraft und der Vergrößerung der Drosselöffnungsfläche ab Erreichen dieser Gegenkraft, d. h. ab Erreichen eines bestimmten Drucks. Im Übrigen wird auf die Erläuterung in der oben stehenden Beschreibung der Erfindung verwiesen.

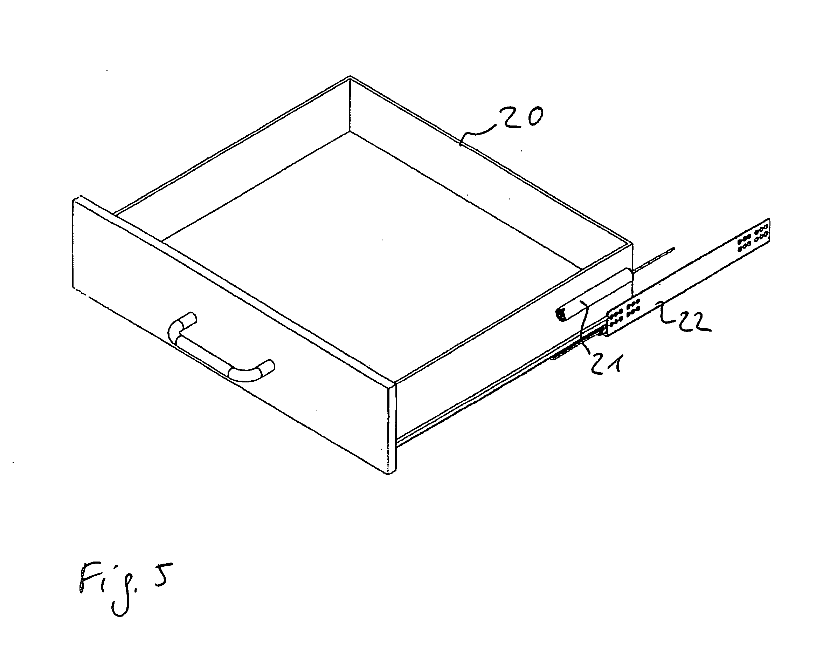

Figur 5 zeigt eine an sich konventionelle Küchenschublade 20 mit einem im rechten Bereich eingezeichneten Lineardämpfer 21 gemäß den Figuren 1 bis 4. Die Merkmale der Küchenschublade 20 einschließlich ihrer Linearführung 22 müssen nicht näher erläutert werden, weil es sich hierbei um völlig konventionelle Einzelheiten handelt. Der Lineardämpfer 21 ist mit seinem Zylinderrohr 1 (in Figur 5 nicht gesondert beziffert) mit einem nicht näher dargestellten Beschlagteil an der Schublade 20 angebracht. Bei diesem Ausführungsbeispiel ist der Hub des Lineardämpfers 21 deutlich geringer als der Hub der Schubladenbewegung, so dass der Lineardämpfer mit seiner Kolbenstange 4 nicht dauerhaft mit dem festen Teil des Küchenmöbels verbunden ist, sondern beim Schließen der Schublade lediglich gegen einen entsprechenden und hier nicht eingezeichneten Anschlag anstößt. Dabei gelten die bisher getroffenen Aussagen für die Dämpfung in dieser Schlussphase der Schließbewegung. Natürlich könnten auch ein größerer Lineardämpfer eingesetzt werden, der dem Hub der Schublade entspricht und auch mit der Kolbenstange dauerhaft montiert ist.

Um zu gewährleisten, dass die Kolbenstange 4 beim Öffnen der Schublade 20 wieder ausfährt, ist in dem in Figur 1 rechten und in Figur 4 linken Teil der pneumatischen Kammer 2 eine nicht gezeichnete Schraubenfeder untergebracht, die eine entsprechende Rückstellkraft erzeugt. Es sind natürlich auch andere Möglichkeiten der Rückstellung durch Federn oder in anderer Weise denkbar.

Es sind auch Ausführungsformen denkbar, bei denen der Dämpfer in zwei Richtungen dämpfend wirkt, entweder indem das oder die Ventilteile so aufgehängt sind, dass sie sich in zwei Richtungen bewegen können und dementsprechend einen Überdruck aus zwei Richtungen durchlassen können oder indem zwei Ventileinrichtungen vorgesehen sind. Durch entsprechende Einwegventile kann dann für die jeweilige Belüftung zur Vermeidung von unerwünschten Unterdruckzuständen gesorgt werden.

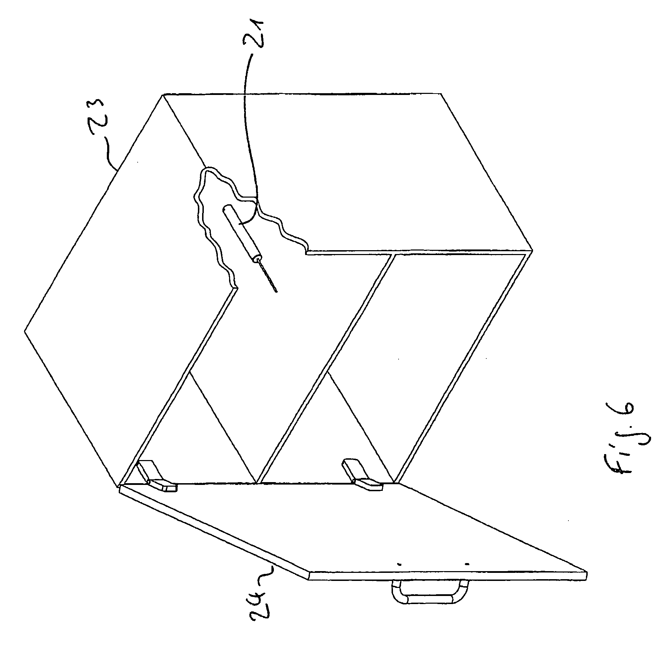

Figur 6 zeigt eine weitere Anwendungsmöglichkeit des Lineardämpfers aus den Figuren 1 bis 4. Dieser ist in der in Figur 6 oberen rechten Ecke eines Küchenoberschranks 23 mit einer konventionellen Schwenktür angebracht und dämpft wiederum die Schlussphase einer Schließbewegung durch Anschlag des Türflügels 24 gegen die Kolbenstange 4. Die obere rechte Ecke des Oberschranks 23 ist aufgebrochen gezeichnet, um den Dämpfer darstellen zu können. Er ist wiederum mit einem nicht eingezeichneten Beschlagteil mit seinem Zylinderrohr 1 an dem Oberschrank 23 montiert.

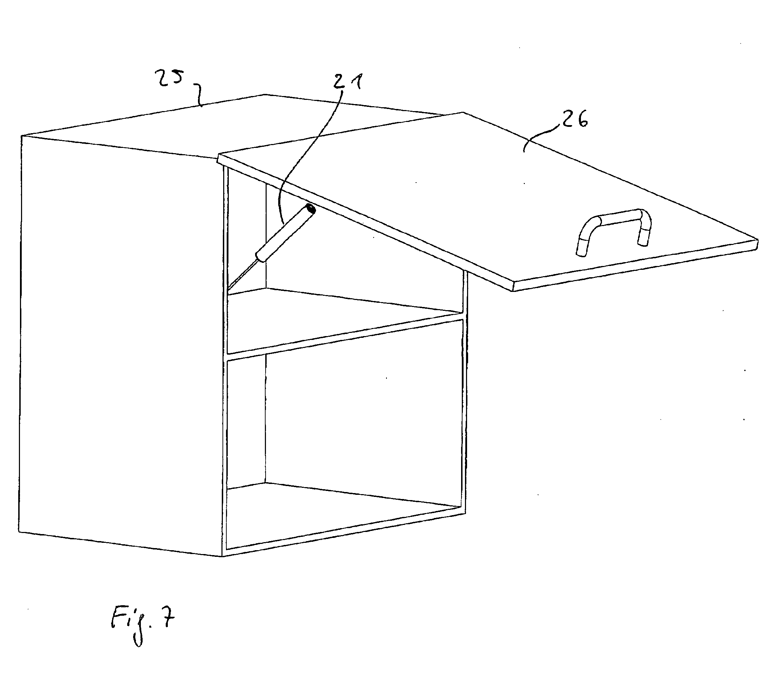

Eine weitere Anwendungsmöglichkeit zeigt Figur 7. Hier ist der Dämpfer 21 mit der Kolbenstange 4 verschwenkbar an einer Innenwand eines Küchenoberschranks 25 mit einer Klappe 26 angebracht und mit dem entgegengesetzten Ende des Zylinderrohres 1 im Bereich der Ventileinrichtung 6 ebenfalls schwenkbar an der Klappe 26 angebracht. Damit dämpft der Lineardämpfer 21 hier die gesamte Öffnungs- und Schließbewegung der Klappe und verdreht sich im Unterschied zu den Figuren 5 und 6 gegenüber dem festen und dem beweglichen Teil des Möbelstücks während seiner Bewegung.

Auch bei diesem Ausführungsbeispiel könnte eine Feder vorgesehen sein, und zwar nicht für eine Rückstellung im engeren Sinn, sondern zur teilweisen Kompensation der Gewichtskraft der Klappe 26.

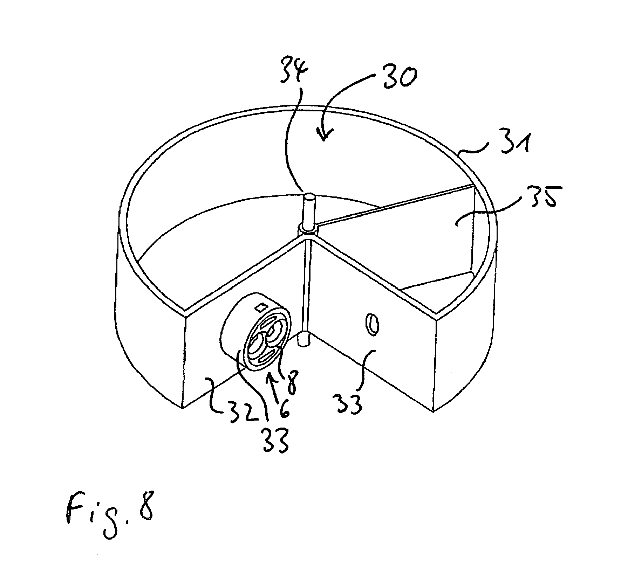

Ein zweites Ausführungsbeispiel für einen erfindungsgemäßen Dämpfer, hier einen rotatorischen Dämpfer, zeigt Figur 8. Hier handelt es sich um eine im Grundriss etwa % - kreisförmige zylindrische pneumatische Kammer 30 mit einer etwa einen Winkel von 270° überspannenden Zylinderaußenwand 31 und zwei das fehlende 90°-Segment begrenzenden radialen Außenwänden 32 und 33. In die Außenwand 32 ist in einer dem ersten Ausführungsbeispiel aus den Figuren 1 bis 4 entsprechenden Weise ein mit dem Elastomerteil 8 aus dem ersten Ausführungsbeispiel identisches entsprechendes Elastomerteil 8 eingesetzt. Dazu weist die Außenwand 32 einen Rohransatz 33 auf, der aufgebaut ist wie das in Figur 1 rechte Ende des dortigen Zylinderrohres 1. Insoweit kann auf die Erläuterungen zum ersten Ausführungsbeispiel Bezug genommen werden.

In der pneumatischen Kammer 30 bewegt sich um eine zentrische Rotationsachse 34 eine radiale Kolbenwand 35 und unterteilt die pneumatische Kammer 30 in zwei Teile.

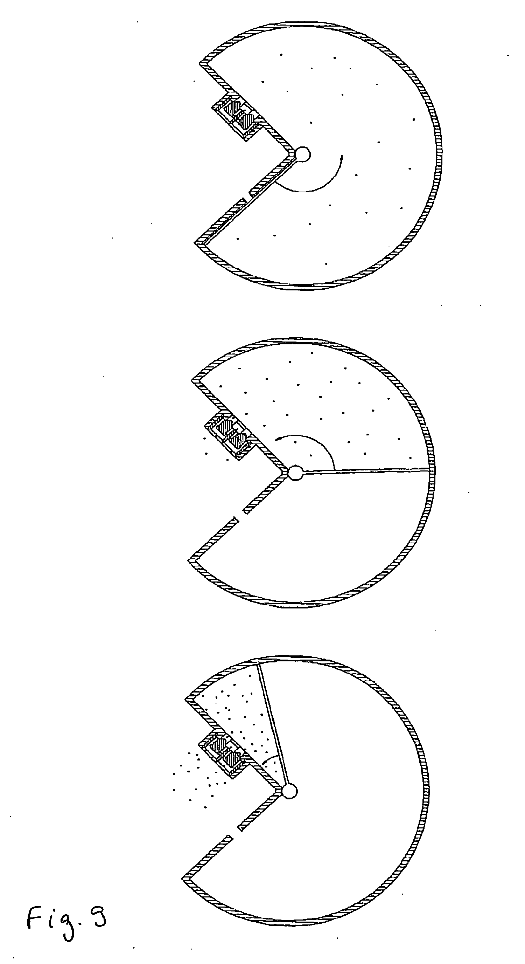

Figur 9 zeigt dies in einer axial gesehenen Schnittdarstellung in drei verschiedenen Stellungen, wobei zur Verbesserung der Klarheit wieder die Bezugszeichen weggelassen sind. Die radiale Kolbenwand 35 bewegt sich in der Reihenfolge der Einzeldarstellungen von oben nach unten von einer maximal von der Ventileinrichtung entfernten Position auf diese zu und komprimiert dabei die in dem kleiner werdenden Teil der pneumatischen Kammer 30 befindliche Umgebungsluft. In dem Zustand gemäß der untersten Darstellung ist der Druck soweit angestiegen, dass die Ventileinrichtung die Drosselöffnung freigegeben hat und damit den Druck begrenzt und stabilisiert. Der sich vergrößernde Teil der pneumatischen Kammer 30 wird durch ein in Figur 8 symbolisch dargestelltes Loch in der Wand 33 belüftet.

Alternativ dazu könnte die Ventileinrichtung auch in der Kolbenwand 35 untergebracht sein, womit die Notwendigkeit der Belüftung des zweiten Teils der Kammer 30 entfallen würde. Ferner könnten die radialen Wände 32 und 33 auch zusammenfallen, so dass die Ventileinrichtung einerseits den einen Teil der Kammer 30 entlüftet und andererseits den anderen Teil belüftet. Es sind insbesondere auch größere oder kleinere Drehwinkel als bei diesem Ausführungsbeispiel denkbar.

## Patentansprüche

1. Pneumatischer Dämpfer zum mechanischen Dämpfen von Bewegungen von Vorrichtungsteilen mit
einer pneumatischen Kammer (2, 30) mit einer beweglichen Wand und
einer Drosselöffnung in einer Wand der pneumatischen Kammer (2, 30) zur Drosselung einer bei zumindest einer zu dämpfenden Bewegungsrichtung infolge der Bewegung der Vorrichtungsteile auftretenden Gasbewegung,
**gekennzeichnet durch** eine Ventileinrichtung (6) mit einem über eine elastische Elastomer-Aufhängung (12) aufgehängten Ventilteil (11), welches die Drosselöffnung begrenzt und die Drosselöffnung mit zunehmendem Druck zwischen den Seiten der Ventileinrichtung (6) infolge einer elastischen Dehnung der Elastomer-Aufhängung (12) vergrößert,
wobei das Ventilteil (11) mit der elastischen Elastomer-Aufhängung (12) einstückig ausgeführt ist.

2. Dämpfer nach Anspruch 1, der dazu ausgelegt ist, mit Umgebungsluft zu arbeiten.

3. Dämpfer nach Anspruch 1 oder 2, bei dem das Elastomer der Aufhängung (12) ausgewählt ist aus der Gruppe der thermoplastischen Elastomere, der thermoplastischen Elastomerverbundstoffe, der Kautschuke, der Silikone und der thermoplastischen Urethane.

4. Dämpfer nach einem der vorstehenden Ansprüche, bei dem das Ventilteil (11) mit der elastischen Aufhängung (12) und einer das Ventilteil (11) und die Aufhängung (12) in geschlossener Form umgebenden Halterung einstückig (8) ausgeführt ist.

5. Dämpfer nach Anspruch 4, bei dem das einstückige Teil als elastischer Stöpsel (8) durch Klemmung in dem Dämpfer gehalten ist.

6. Dämpfer nach einem der vorstehenden Ansprüche, der als Linearzylinder ausgebildet ist und bei dem die bewegliche Wand durch einen Zylinderkolben (3) gebildet ist.

7. Dämpfer nach Anspruch 6, bei dem die Ventileinrichtung (6) in einer dem Zylinderkolben (3) gegenüberliegenden Wand (14) vorgesehen ist.

8. Dämpfer nach einem der vorstehenden Ansprüche, der ausgelegt ist zum Dämpfen der Bewegung von Möbel-, Haus-, Zimmer-, Autotüren, -klappen oder -schubladen (20, 24, 26).

9. Verfahren zum Herstellen eines Dämpfers nach einem der vorstehenden Ansprüche, bei dem das Elastomerteil (8) durch ein Spritzguss-, Vakuum- oder Druckgussverfahren hergestellt wird.

## Claims

1. A pneumatic damper for mechanically damping movements of device elements, having
a pneumatic chamber (2, 30) comprising a movable wall and
a throttle orifice in a wall of said pneumatic chamber (2, 30) for throttling a gas movement occurring with at least one movement direction to be damped and due to the movement of the device elements,
**characterized by** valve means (6) comprising a valve element (11) suspended by an elastic elastomer suspension (12), said valve element (11) defining said throttle orifice and augmenting said throttle orifice with increasing pressure between the sides of said valve means (6) and due to an elastic stretching of said elastomer suspension (12),
wherein said valve element (11) is integrally formed with said elastic elastomer suspension (12).

2. The damper according to claim 1 being adapted to work with ambient air.

3. The damper according to claim 1 or 2 wherein the elastomer of said suspension (12) is chosen from the group consisting of thermoplastic elastomers, thermoplastic elastomer composite materials, caoutchoucs, silicones, and thermoplastic urethanes.

4. The damper according to one of the preceding claims wherein said valve element (11) is integrally formed with said elastic suspension (12) and a mounting formed around said valve element (11) and said suspension (12) in a closed shape.

5. The damper according to claim 4 wherein said integral part is fixed in said damper by clamping as an elastic plug (8).

6. The damper according to one of the preceding claims being formed as a linear cylinder, said movable wall being formed by a cylinder piston (3).

7. The damper according to claim 6 wherein said valve means (6) are provided in a wall (14) opposing said cylinder piston (3).

8. The damper according to one of the preceding claims being adapted for damping the movements of doors, flaps, or drawers of furniture, houses, rooms, or cars (20, 24, 26).

9. A method for producing said damper according to one of the preceding claims wherein said elastomer element (8) is produced by an injection molding, a vacuum, or a die-casting method.

## Revendications

1. Amortisseur pneumatique pour l'amortissement mécanique de mouvements de parties d'un dispositif comprenant
une chambre (2, 30) pneumatique avec une paroi mobile et une ouverture de restriction dans une paroi de la chambre (2, 30) pneumatique pour la restriction d'un mouvement de gaz qui apparaît dans le cas d'au moins une direction de mouvement à amortir du fait du déplacement des parties du dispositif,
**caractérisé par** un dispositif de soupape (6) avec une partie de soupape (11) suspendue au moyen d'une suspension élastique en élastomère (12), qui. limite l'ouverture de restriction et agrandit l'ouverture de restriction avec une pression croissante entre les côtés du dispositif de soupape (6) en raison d'une extension élastique de la suspension en élastomère (12),
la partie de soupape (11) étant réalisée d'une seule pièce avec la suspension élastique en élastomère (12).

2. Amortisseur selon la revendication 1, qui est conçu pour travailler avec de l'air ambiant.

3. Amortisseur selon la revendication 1 ou 2, sur lequel l'élastomère de la suspension (12) est choisi dans le groupe des élastomères thermoplastiques, des produits composites en élastomère thermoplastiques, des caoutchoucs, des silicones et des uréthanes thermoplastiques.

4. Amortisseur selon l'une quelconque des revendications précédentes, sur lequel la partie de soupape (11) est réalisée d'une seule pièce avec la suspension (12) élastique et un support entourant la partie de soupape (11) et la suspension (12) dans une forme fermée.

5. Amortisseur selon la revendication 4, sur lequel la partie d'une seule pièce est maintenue par serrage dans l'amortisseur sous forme de bouchon (8) élastique.

6. Amortisseur selon l'une quelconque des revendications précédentes, qui est conçu sous forme de cylindre linéaire et sur lequel la paroi mobile est formée par un piston de cylindre (3).

7. Amortisseur selon la revendication 6, sur lequel le dispositif de soupape (6) est prévu dans une paroi (14) faisant face au piston de cylindre (3).

8. Amortisseur selon l'une quelconque des revendications précédentes, qui est conçu pour l'amortissement du mouvement de portes, de trappes ou de tiroirs de meuble, de maison, de pièce ou de voiture (20, 24, 26).

9. Procédé pour fabriquer un amortisseur selon l'une quelconque des revendications précédentes, dans lequel la partie en élastomère (8) est fabriquée par un procédé de moulage par injection, un procédé de moulage sous vide ou un procédé de moulage sous pression.
